# NEUE EUROPÄISCHE PATENTSCHRIFT

(11) **EP 1 343 974 B2**
(45) Veröffentlichungstag und Bekanntmachung des Hinweises auf die Entscheidung über den Einspruch: **20.02.2008**
(45) Hinweis auf die Patenterteilung: 30.03.2005
(21) Anmeldenummer: 01270705.5
(22) Anmeldetag: 20.11.2001
(51) Int. Cl.: F16B 7/04

(54) **VERBINDEREINRICHTUNG FÜR PROFILE**
CONNECTOR FOR PROFILES
SYSTEME DE CONNEXION POUR PROFILES

(30) Priorität: 12.12.2000 DE 20020996 U
(43) Veröffentlichungstag der Anmeldung: 17.09.2003
(73) Patentinhaber: FMS Förder- und Montage-Systeme Schmalzhofer GmbH, 75031 Eppingen (DE)
(72) Erfinder: SCHMALZHOFER, Rainer, 75031 Eppingen-Kleingartach (DE)
(74) Vertreter: Clemens, Gerhard
(86) Internationale Anmeldenummer: PCT/DE2001/004365
(87) Internationale Veröffentlichungsnummer: WO 2002/048555

(56) Entgegenhaltungen:
- CH-A- 645 957
- DE-A- 2 732 887
- DE-A- 3 603 393
- DE-A- 4 244 603
- DE-U- 9 420 832
- US-A- 4 641 983

## Beschreibung

Die vorliegende Erfindung betrifft eine Profilverbindung mit einer Verbindereinrichtung zum Verbinden eines ersten Profils mit der Stirnseite eines zweiten Profils, das eine Zentralausnehmung aufweist, mit einem Verbinderbolzen mit einem Schaft und einer Endkontur, wobei der Schaft des Verbinderbolzens in der Zentral- ausnehmung des zweiten Profils anordenbar und fixierbar ist, und die Endkontur in montiertem Zustand der Verbinder- einrichtung eine Ausnehmung, insbesondere Nut, in dem ersten Profil klemmend hintergreift, wobei an den Verbinderbolzen an der der Endkontur gegenüberliegenden Stirnseite ein Verlängerungselement mit einem Endanschlag anschließt, das Verlängerungselement gleitend in einer Buchse gelagert ist, zwischen der Buchse und dem Verbinderbolzen ein elastisches Element vorhanden ist, das auf die Buchse und den Verbinderbolzen direkt oder indirekt einwirkt, und die Buchse im Bereich des Verlängerungselements angeordnet ist, wobei der Durchmesser des Schaftes des Verbindungsbolzens dem Durchmesser der Zentralausnehmung des zweiten Profils entspricht und die Buchse Klemmend in der Zentralausnehmung des zweite Profils fixierbar ist.

Derartige Verbindereinrichtungen werden bevorzugt zur Verbindung von Aluminiumprofilen eingesetzt, wobei das erste Profil außenseitig mindestens eine Nut aufweist und das zweite Profil von seiner Stirnseite her mittels der Verbindereinrichtung an das erste Profil angeschlossen wird.

### STAND DER TECHNIK

Aus der EP-0 311 834 B1 und DE 9420832 U1 ist eine Profilverbindung der eingangs genannten Art bekannt. Die Verklemmung der Profile erfolgt über einen Verbinderbolzen mit einer kegeligen Senkung, in die ein kegelförmiger Gewindestift eingreift, der in eine im zweiten Profil eingesetzte Spannhülse eingeschraubt wird.

Bei einer weiteren bekannten Verbindereinrichtung wird zur Verbesserung der Handhabung bei der Montage zwischen der Hülse und dem Verbinderkopf eine Feder eingesetzt, welche den Verbinderbolzen nach außen drückt, so dass ein erforderliches Fügespiel zum Einfädeln des Verbinderbolzens in das erste Profil entsteht. Der Nachteil dieser Lösung liegt in der Schwächung des Verbinderbolzens, der für die Aufnahme der Feder abgesetzt werden muss, was zu einer Reduzierung der Spannfläche zwischen Kegelsenkung und Gewindestift führt. Darüber hinaus bringt eine derartige Verbindereinrichtung einen relativ hohen Aufwand bei der Montage bzw. dem Einbringen der Feder mit dem Bolzen in die Spannhülse mit sich.

Bei der in der DE 38 19 609 A1 offenbarten Verbindereinrichtung wird die Feder zwischen einen in die Profilbohrung einzubringenden Stopfen und den Verbinderbolzen gesetzt. Auch hier ist ein relativ hoher Aufwand für das Einbringen des Stopfens mittels eines Montagehilfswerkzeuges erforderlich. Auch die Feder muss separat in die Bohrung eingefädelt werden und erst danach kann der Bolzen in die Hülse geführt und mittels Gewindestift festgehalten werden.

Aus der US-A-4 641 983 als nächstkommender Stand der Technik ist eine Verbindereinrichtung mit den Merkmalen des Oberbegriffs von Anspruch 1 bekannt.

### DARSTELLUNG DER ERFINDUNG

Ausgehend von dem genannten Stand der Technik liegt der vorliegenden Erfindung die Aufgabe beziehungsweise das technische Problem zugrunde, eine profilverbindung anzugeben, die einfach montiert werden kann, einfach zu handhaben ist, das erforderliche Fügespiel zum Einfädeln des Verbinderbolzens gewährleistet und insgesamt eine dauerhaft zuverlässige Verbindung der beiden Profile ermöglicht.

Die erfindungsgemäße Profilverbindung ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Verbindereinrichtung zeichnet sich demgemäß dadurch aus, dass die Geometrie der Anordnung beziehungsweise die Länge des Verlängerungselements, des Verbinderbolzens mit Endkontur und das elastische Element so aufeinander abgestimmt sind, dass nach dem klemmenden Eindrücken der Buchse in die Zentralausnehmung des zweiten Profils aufgrund des elastischen Elements die Endkontur um ein Maß über die Stirnseite des zweiten Profils übersteht, die der Einfädelungsnuttiefe des ersten Profils entspricht.

Das Federelement ist somit nach dem Verbinderbolzen angeordnet, so dass zum Verspannen des Verbinderbolzens dessen voller Querschnitt verfügbar ist und damit eine große Anlagefläche für eine Spannschraube zur Verfügung steht.

Eine besonders bevorzugte Ausgestaltung, die eine wirtschaftliche Herstellung gewährleistet, zeichnet sich dadurch aus, dass das elastische Element als Federelement, insbesondere als das Verlängerungselement bereichsweise umgebende Spiralfeder, ausgebildet ist.

Gemäß einer alternativen Ausgestaltung kann das Verlängerungselement einstückig mit dem Verbinderbolzen ausgebildet sein oder das Verlängerungselement, der Verbinderbolzen, die Buchse und das elastische Element eine einzige handhabbare Einheit bilden.

Eine besonders bevorzugte Ausgestaltung zeichnet sich dadurch aus, dass das Verlängerungselement als Einschlagelement, insbesondere Kerbnagel, Einschlagstift oder Rändelstift, ausgebildet ist.

Alternativ besteht die Möglichkeit, das Verlängerungselement lösbar, insbesondere über ein Rastelement am Verlängerungselement und ein entsprechendes Gegenrastelement am Schaft des Verbinderbolzens, auszubilden.

Das Verlängerungselement kann als Kunststoff-Spritzteil oder als Automaten-Drehteil ausgebildet sein.

Eine vorteilhafte Ausgestaltung, die einen zuverlässigen Sitz der Buchse innerhalb der Zentralausnehmung gewährleistet, zeichnet sich dadurch aus, dass die in der Wandung der Zentralausnehmung des zweiten Profils anliegende Außenkontur der Buchse zweilippig ausgebildet ist.

Alternativ kann die Außenkontur der Buchse auch teilkreisförmig mit konvexer Krümmung ausgebildet sein.

Hinsichtlich einer einfachen Herstellung ist es vorteilhaft, innerhalb der Buchse eine Gleitbundbuchse vorzusehen.

Eine besonders hinsichtlich einer wirtschaftlichen Herstellung vorteilhafte Ausgestaltung zeichnet sich dadurch aus, dass das der Schaft der Verlängerungseinheit einen Anschlag für die Buchse aufweist. Bevorzugt ist die Buchse mit einem radialen Schlitz versehen, der in Verbindung mit einem in der Wandung eingelegten Sprengring eine zuverlässige Fixierung der Buchse innerhalb der Zentralausnehmung während des Montagevorgangs gewährleistet.

Um die Festigkeit des gesamten Anschlusses zu erhöhen, zeichnet sich eine besonders bevorzugte Weiterbildung dadurch aus, dass die Kopfkontur des Verbinderbolzens als Kreisquerschnittskopf ausgebildet ist, dessen zum Schaft weisender umlaufender Stirnrand eine Ringschneide aufweist.

Um eine zuverlässige Übertragung der erforderlichen Anschlusskräfte zu gewährleisten, zeichnet sich eine besonders vorteilhafte Ausgestaltung dadurch aus, dass eine Verbinderhülse mit Innengewinde vorhanden ist, die in eine senkrecht zur Längsrichtung des zweiten Profils vorhandene Bohrung einbringbar ist, und die eine Bolzenausnehmung aufweist, derart, dass die Verbindereinrichtung bei in die Bohrung eingesetzter Verbinderhülse durch die Bolzenausnehmung schiebbar ist und in deren Innengewinde ein Gewindestift mit entsprechendem Außengewinde eindrehbar ist, der zumindest bereichsweise formschlüssig mit seinem Stirnendbereich in eine am Schaft des Verbinderbolzens vorhandene Kontur einschraubbar ist, wodurch eine Verklemmung der Endkontur des Verbinderbolzens in der Ausnehmung des ersten Profils erfolgt.

Mit der erfindungsgemäßen Verbindereinrichtung werden sämtliche der im Stand der Technik bekannten Nachteile vermieden. Der Verbinderbolzen ist mit einem Federelement versehen, das nach der kegelförmigen Senkbohrung des Verbinderschaftes angeordnet ist. Dadurch erfolgt keine Schwächung des Verbinderbolzens im Funktions- und Spannbereich. Das Federelement ist gegenüber den bekannten Ausführungen kein Loseteil, sondern ein integraler Bestandteil der Verbindereinrichtung und stützt sich zwischen einem Absatz am Verbinderbolzen sowie an der Buchse ab. Die Buchse weist eine Gleithülse auf, in der das Verlängerungselement gleitend geführt wird, wobei die Buchse gegenüber der Innenwandung der Zentralausnehmung als dichtungsähnliches Halteelement ausgebildet ist, das sich beim Einbringen des Verbinderbolzens an der Innenwandung der Zentralausnehmung form-elastisch verkeilt. Dadurch wird während der Montage das Federelement zur Wirkung gebracht und dieses drückt den Verbinderbolzen nach außen, womit das erforderliche Fügespiel erreicht wird. Durch die Klemmwirkung der Buchse ist ein im Stand der Technik erforderliches Sichern der Verbindungsteile über eine Kegelschraube während der Montage nicht erforderlich, so dass diese Handhabung während der Montage entfällt und die Spannschraube erst betätigt wird, wenn die Profile in Fügeposition sind.

Hinsichtlich einer einfachen Montage zeichnet sich die Verbindereinrichtung nach der Erfindung besonders dadurch aus, dass die Geometrie der Anordnung beziehungsweise die Länge des Verlängerungs-elements, des Verbinderbolzens mit Endkontur und das elastische Element so aufeinander abgestimmt sind, dass nach dem klemmenden Eindrücken der Buchse in die Zentralausnehmung des zweiten Profils die Endkontur um ein Maß über die Stirnseite des zweiten Profils übersteht, die der Einfädelungsnuttiefe des ersten Profils entspricht.

Eine besondere Weiterentwicklung, die eine schnelle und einfache Montage ermöglicht zeichnet sich dadurch aus, dass die Endkontur des Verbinderbolzens zumindest einen eben abgeflachten Bereich aufweist, der bei in die Nut des ersten Profils eingeführter Endkontur an der Nutlängswandung anliegt und damit eine Verdrehsicherung bildet, wobei in einer bevorzugten Weiterbildung die Endkontur zwei sich gegenüberliegende abgeflachte ebene Bereiche aufweist.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Schnittdarstellung durch den Verbindungsbereich zweier Profile mit einer ersten Ausführungsvariante einer Verbindereinrichtung mit lösbar angeordnetem Verlängerungselement mit Buchse und Federelement,
- Fig. 2: schematische Darstellung des Verbindungsbereiches gemäß Fig. 1 in perspektivischer Explosionsdarstellung,
- Fig. 3: schematische Darstellung des Verbindungsbereiches zweier Profile mit einer zweiten Ausführungsvariante der Verbindereinrichtung mit als Einschlagstift ausgebildetem Verlängerungselement mit Buchse und Federelement in perspektivischer Explosionsdarstellung,
- Fig. 4: schematischer Detailschnitt durch eine Buchse mit zweilippiger Außenkontur und Sprengring,
- Fig. 5: schematische Schnittdarstellung durch eine in ein zweites Profil klemmend eingedrückte Verbindereinrichtung mit überstehender Endkontur,
- Fig. 6: schematische Detailperspektive des Verbindungsbereichs zweier Profile mit teilweise aufgeschnittenen Profilen und einer Verbindereinrichtung mit einem Verbinderbolzen mit abgeflachter Endkontur und
- Fig. 7: schematische Detailperspektive des Verbindungsbolzens mit abgeflachter Endkontur.

### WEGE ZUM AUSFÜHREN DER ERFINDUNG

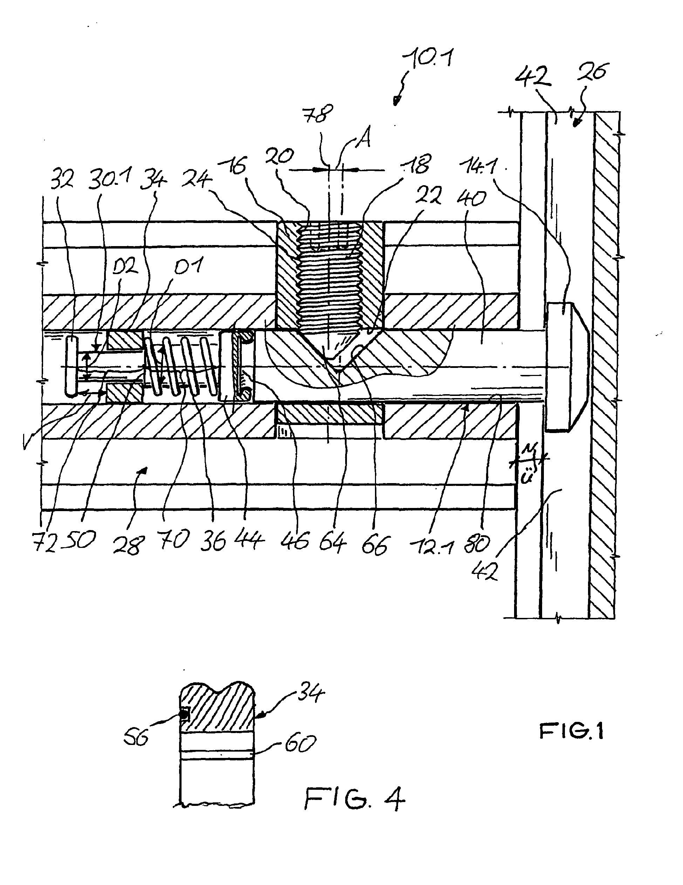

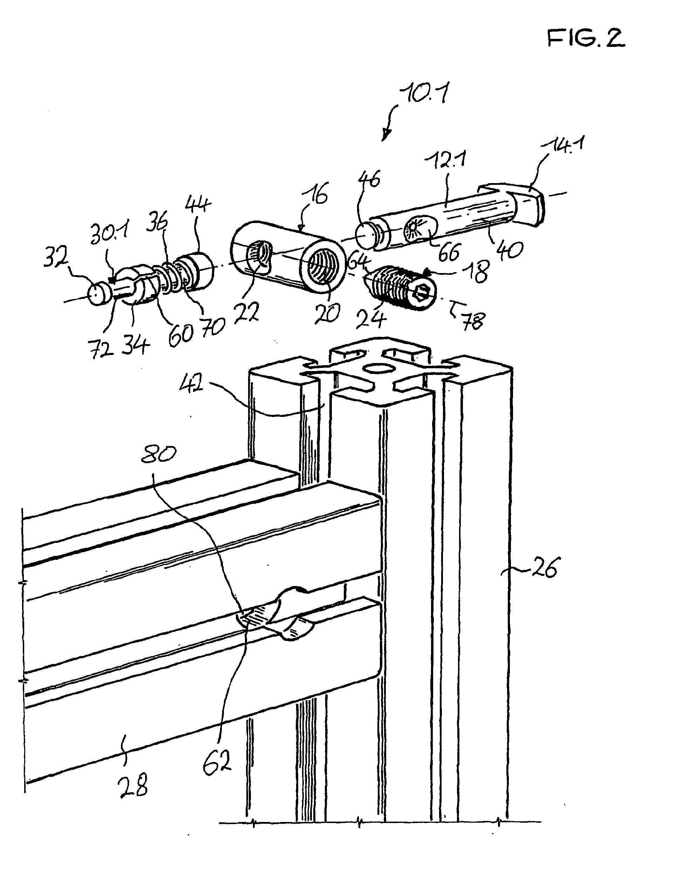

In den Figuren 1 und 2 ist ein erstes Ausführungsbeispiel einer Verbindereinrichtung 10.1 zum Verbinden eines ersten Pro-fils 26 mit einem zweiten Profil 28 dargestellt. Beide Profile 26, 28 sind Aluminium-Strangpressprofile, die auf jeder Außenseite eine Nut 42 und zudem eine durchgehende Zentralausnehmung 80 in ihrer Querschnittsmitte aufweisen. Das zweite Profil 28 wird mit seinem Stirnendbereich an dem ersten Profil 26 befestigt. Hierzu wird die Verbindereinrichtung 10.1 in die Zentralausnehmung 80 des zweiten Profils 28 eingeführt.

Die Verbindereinrichtung 10.1 besitzt einen Verbinderbolzen 12.1 mit einem zylindrischen Schaft 40, an dessen vorderen Stirnendbereich eine Kopfkontur 14.1 angeformt ist, die als Hammerkopf ausgebildet ist. Die Kopfkontur 14.1 ist dabei so gestaltet, dass sie hintergreifend in die Nut 42 eingeführt werden kann. An dem der Kopfkontur 14.1 gegenüberliegenden Stirnendbereich des Schaftes 40 ist ein Gegenrastelement 46 mit einem umlaufenden Vorsprung angeformt. Weiterhin weist der Schaft 40 noch eine kegelförmige Ausnehmung 66 (Senkbohrung) auf.

An dem Gegenrastelement 46 ist ein entsprechendes Rastelement 44 verrastet, das Bestandteil eines stufenförmig zylindrischen Verlängerungselements 30.1 mit einem ersten Bereich 70 mit einem Durchmesser D1 und einem daran anschließenden zweiten Bereich 72 mit einem Durchmesser D2 ist.

An dem dem Rastelement 44 gegenüberliegenden Endbereich des Verlängerungselementes 30.1 ist ein Endanschlag 32 angeformt. Auf dem zweiten Bereich 72 ist gleitend eine Buchse 34 angeordnet, deren Außendurchmesser so ausgebildet ist, dass die Buchse 34 klemmend in der Zentralausnehmung 80 des zweiten Profils 28 anordenbar ist. Zwischen der Buchse 34 und dem Rastelement 44 ist im ersten Bereich 70 ein den ersten Bereich 70 umgebendes Federelement 36, nämlich eine Schraubenfeder, angeordnet, die sich einerseits gegen das Rastelement 44 und andererseits gegen die Buchse 34 abstützt. Da der Durchmesser D1 des ersten Bereichs 70 größer ist als der Durchmesser D2 des zweiten Bereichs 72, ist beim Übergang zwischen den beiden Bereichen 70, 72 eine Anschlagfläche 50 für die Buchse 34 vorhanden. Den gegenüberliegenden Anschlag für die Buchse 34 bildet der an den zweiten Bereich 72 angeformte Endanschlag 32.

Aufgrund der gewählten Geometrie kann somit die Buchse 34 um das Maß V entgegen der Wirkung der Schraubenfeder 36 elastisch federnd verschoben werden. Umgekehrt bedeutet dies, dass im Montagefall, wenn der Verbinderbolzen 12.1 mit dem Verlängerungselement 30.1 in die Zentralausnehmung 80 eingesetzt ist, für die Kopfkontur 14.1 ein elastisch nachgiebiges Fügespiel in Richtung der Längsachse der Zentralausnehmung 80 vorhanden ist, so dass das Einfädeln der Kopfkontur 14.1 in die Nut 42 in einfacher Art und Weise vorgenommen werden kann.

Zum Herstellen der Verbindung zwischen dem ersten Profil 26 und dem zweiten Profil 28 wird während der Montage wie folgt vorgegangen.

Zunächst wird in das zweite Profil 28 senkrecht zur Zentralausnehmung 80 eine Bohrung 62 gebohrt. In diese Bohrung 62 wird eine Verbinderhülse 16 mit Innengewinde 20 eingeführt. Die Verbinderhülse 16 hat hierbei senkrecht zu ihrer Längsachse eine Bolzenausnehmung 22, die bei in die Bohrung 62 eingeführter Verbinderhülse 16 mit der Zentralausnehmung 80 zur Deckung gebracht wird. Nach dem Einführen der Verbinderhülse 16 wird der Verbinderbolzen 12.1 mit aufgesteckten Verlängerungselement 30.1, Buchse 34 und Federelement 36 in die Zentralausnehmung 80 und durch die Bolzenausnehmung 22 der Verbinderhülse 16 hindurchgeführt. Durch die klemmende Wirkung der Buchse 34 in Verbindung mit dem Federelement 36 ist eine gewisse Fixierung des Verbinderbolzens 12.1 gegeben, wobei jedoch gleichzeitig ein ausreichendes Montagespiel zum Einfädeln der Kopfkontur 14.1 in die Nut 42 zur Verfügung steht. Nachdem die Kopfkontur 14.1 in die Nut 42 des ersten Profils 26 eingefädelt ist, wird in die Verbinderhülse 16 ein Gewindestift 18 mit Außengewinde 24 eingeschraubt, der eine Kegelspitze 64 aufweist, die mit zunehmender Einschraubung an die Kegelwandung der Ausnehmung 66 des Schaftes 40 des Verbinderbolzens 12.1 drückt. Die Längsachse 78 des Gewindestiftes 18 ist um das Maß A versetzt zur Spitze der kegelförmigen Ausnehmung 66 des Schaftes 40 angeordnet. Dies bewirkt, dass der Stirnendbereich 64 als Kegelspitze beim Einschrauben des Gewindestiftes 18 an die hintere Anlagefläche der kegelförmigen Ausnehmung 66 drückt, wird der Verbinderbolzen 12.1 in Richtung des zweiten Profils 28 gepresst, wodurch die Kopfkontur 14.1 die Innenflanken der Nut 42 des ersten Profils 26 pressend hintergreift. Dadurch wird eine zuverlässige Verbindung des zweiten Profils 28 mit dem ersten Profil 26 gewährleistet.

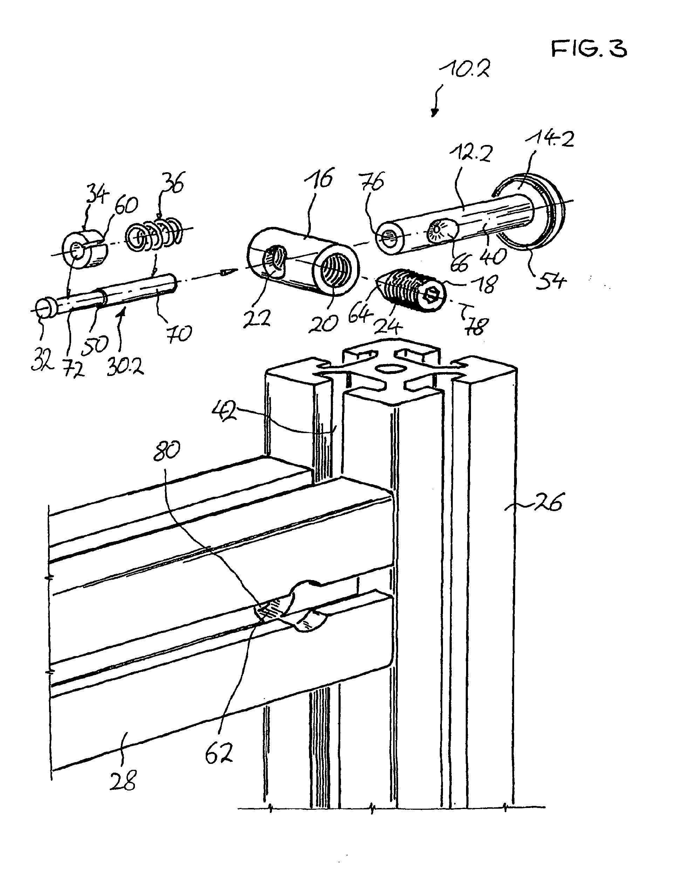

Das Ausführungsbeispiel gemäß Fig. 3 zeigt eine weitere Variante einer Verbindereinrichtung 10.2, bei der ein Verlängerungselement 30.2 verwendet wird, das als Einschlagstift ausgebildet ist, der in eine an dem Schaft 40 des Verbinderbolzens 12.2 vorhandene Ausnehmung 76 einschlagbar ist. Ansonsten ist bei dem Verlängerungselement 30.2 ebenfalls eine Buchse 34 und eine Schraubenfeder 36 vorhanden. Sobald das Verlängerungselement 30.2 eingeschlagen ist, ist eine unlösbare Verbindung mit dem Schaft 40 des Verbinderbolzens 12.2 hergestellt. Während der Montage ist somit lediglich ein Teil in die Zentralausnehmung 80 des zweiten Profils 28 einzuführen. Der letztendlich kraftübertragende Anschluss wird auch hier durch die oben beschriebene Verbinderhülse 16 mit eingeschraubtem Gewindestift 18 gewährleistet.

Fig. 4 zeigt im Detail einen Querschnitt durch eine Ausführungsform der Buchse 34, die eine zweilippige Umfangskontur aufweist, einen Schlitz 60 besitzt und in deren Seitenwandung ein Sprengring 56 eingelegt ist. Die innere Ausnehmung der Buchse 34 kann beispielsweise durch eine Gleitbundbuchse gebildet sein.

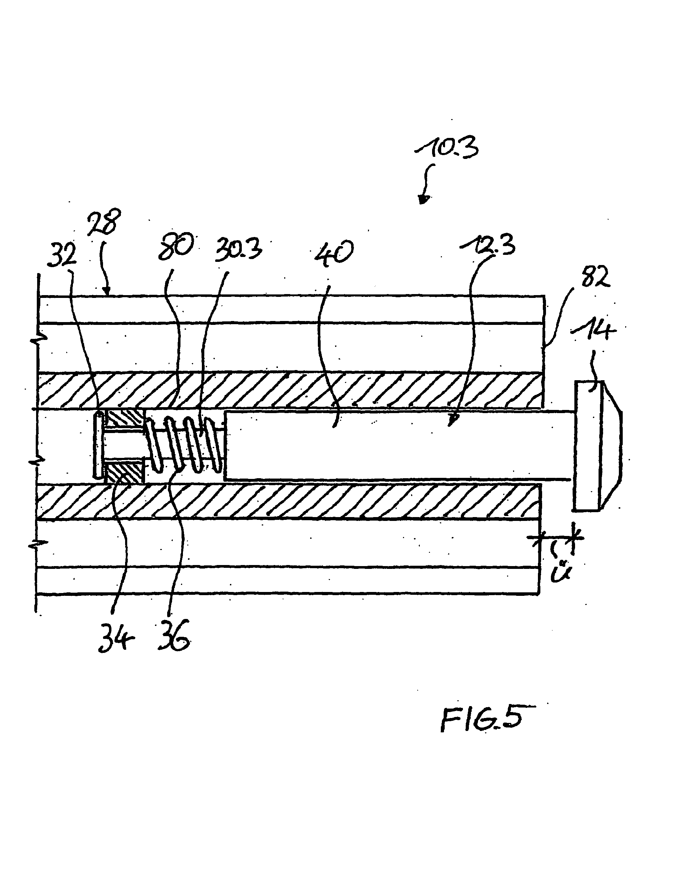

In Fig. 5 ist schematisch eine Schnittdarstellung durch das zweite Profil 28 dargestellt, bei in die Zentralausnehmung 80 eingesteckter Verbindereinrichtung 10.3. Über die Buchse 34 ist die Verbindereinrichtung 10.3 klemmend in der Zentralausnehmung 80 gehalten. Die Geometrie beziehungsweise die Länge des Verlängerungselements 30.3 und des Verbinderbolzens 12.3 ist dabei so gewählt, dass in diesem Zustand aufgrund des Federelements 36 die Endkontur 14 des Verbinderbolzens 12.3 gegenüber der Stirnseite 82 des zweiten Profils 28 einen Überstand Ü aufweist, der so bemessen ist, dass dieser dem Abstand N des Beginns der hinterschnittenen Nut 42 des ersten Profils 26 entspricht. Dadurch ist ein problemloses Einfädeln der Endkontur 14 in die Nut 42 möglich. Ein Einfädeln in geringeren Nuttiefen ist ebenfalls möglich, in dem die Verbindereinrichtung 10.3 entgegen der Wirkung des Federelements 36 in die Zentralausnehmung 80 weiter eingedrückt wird. Die Fixierung der Verbindereinrichtung 10.3 innerhalb der Zentralausnehmung über ein Gewindestift ist in Fig. 5 nicht näher dargestellt.

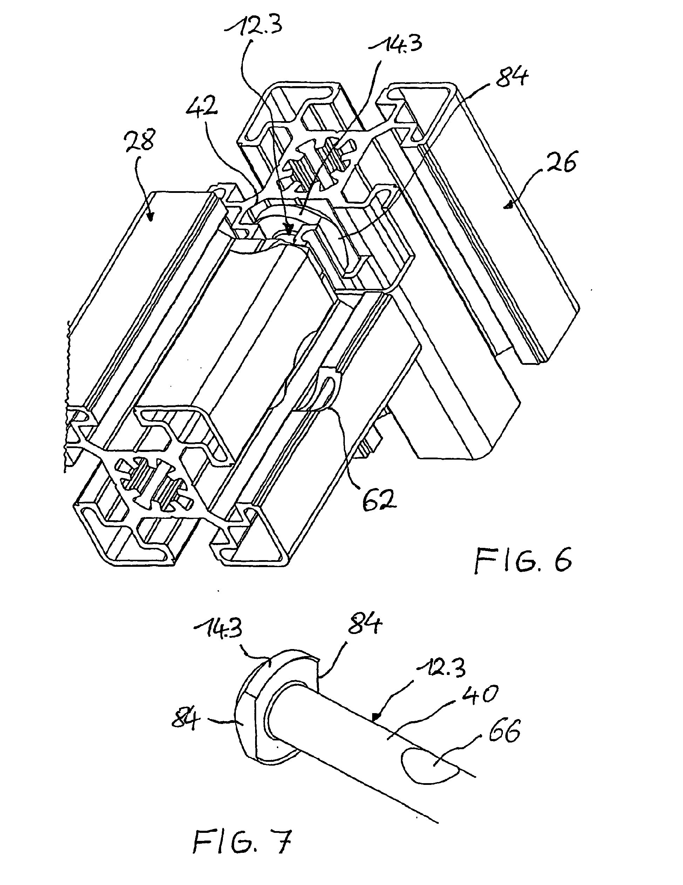

Fig. 6 zeigt eine schematische Detailperspektive im Verbindungsbreich bei teilweise aufgeschnittenen Profilen. Bei dieser Ausführungsform wird ein Verbinderbolzen 12.3 eingesetzt, der eine Endkontur 14.3 aufweist, die zwei sich gegenüberliegende abgeflachte Bereiche 84 besitzt, wobei die abgeflachten Bereiche 84 bei in die Nut 43 des ersten Profils 26 eingeführter Endkontur 14.3 an den Nutenlängsseiten anliegen, wodurch eine Verdrehsicherung der Verbindereinrichtung gegeben ist. Eine derartige Verdrehsicherung erleichtert die Montage wesentlich.

## Patentansprüche

1. Profilverbindung mit einer Verbindereinrichtung (10.1, 10.2) mit einem ersten Profil (26) mit einer Nut (42) mit einer vorgegebenen Nuttiefe (N) und einem zweiten Profil (28) zum Verbinden der ersten Profils (26) mit der Stirnseite des zweiten Profils (28), das eine Zentralausnehmung (80) aufweist, mit
- einem Verbinderbolzen (12.1, 12.2) mit einem Schaft (40) und einer Endkontur (14), wobei der Schaft (40) des Verbinderbolzens (12.1, 12.2) in der Zentralausnehmung (80) des zweiten Profils (28) anordenbar und fixierbar ist, und die Endkontur (14) in montiertem Zustand der Verbindereinrichtung eine Ausnehmung, insbesondere Nut (42), in dem ersten Profil (26) klemmend hintergreift, wobei
- an den Verbinderbolzen (12.1, 12.2) an der der Endkontur (14) gegenüberliegenden Stirnseite ein Verlängerungselement (30.1, 30.2) mit einem Endanschlag (32) anschließt,
- das Verlängerungselement (30.1, 30.2) gleitend in einer Buchse (34) gelagert ist,
- zwischen der Buchse (34) und dem Verbinderbolzen (12.1, 12.2) ein elastisches Element (36) vorhanden ist, das auf die Buchse (34) und den Verbinderbolzen (12.1, 12.2) direkt oder indirekt einwirkt,
- die Buchse (34) im Bereich des Verlängerungselements (30.1, 30.2) angeordnet ist, wobei der Durchmesser des Schaftes (40) des Verbinderbolzens (12.1, 12.2) dem Durchmesser der Zentralausnehmung (80) des zweiten Profils (28) entspricht, und
- die Buchse (34) klemmend in der Zentralausnehmung (80) des zweite Profils (28) fixierbar ist, **dadurch gekennzeichnet, dass**
- die Geometrie der Anordnung beziehungsweise die Länge des Verlängerungselements (30.3), des Verbinderbolzens (12.1) mit Endkontur (14) und das elastische Element (36) so aufeinander abgestimmt sind, dass nach dem klemmenden Eindrücken der Buchse (34) in die Zentralausnehmung (80) des zweiten Profils (28) aufgrund des elastischen Elements (36) die Endkontur (14) um ein Maß (Ü) über die Stirnseite (82) des zweiten Profils (28) übersteht, die der Einfädelungsnuttiefe (N) des ersten Profils (26) entspricht.

2. Profilverbindung nach Anspruch 1,
**dadurch gekennzeichnet, dass** - das elastische Element (36) als Federelement, insbesondere als das Verlängerungselement (30.1, 30.2) bereichsweise umgebende Spiralfeder, ausgebildet ist.

3. Profilverbindung nach Anspruch 1 oder 2,
**dadurch gekennzeichnet, dass**
- das Verlängerungselement einstückig mit dem Verbinderbolzen verbunden ist beziehungsweise das Verlängerungselement (30.1, 30.2), der Verbinderbolzen (12.1, 12.2), die Buchse (34) und das elastische Element (36) eine einzige handhabbare Einheit bilden.

4. Profilverbindung nach Anspruch 1 oder 2,
**dadurch gekennzeichnet, dass**
- das Verlängerungselement (30.2) als Einschlagelement, insbesondere Kerbnagel, Einschlagstift oder Rändelstift, ausgebildet ist.

5. Profilverbindung nach Anspruch 1 oder 2,
**dadurch gekennzeichnet, dass**
- das Verlängerungselement (30.1) lösbar an dem Verbinderbolzen (12.1) angeschlossen ist.

6. Profilverbindung nach Anspruch 5,
**dadurch gekennzeichnet, dass**
- das Verlängerungselement (30.1) zum lösbaren Anschluss an den Verbinderbolzen (12.1) ein Rastelement (44) und der Verbinderbolzen (12.1) ein entsprechendes Gegenrastelement (46) aufweist.

7. Profilverbindung nach einem oder mehreren der vorstehenden Ansprüche,
**dadurch gekennzeichnet, dass**
- das Verlängerungselement als Kunststoff-Spritzteil ausgebildet ist.

8. Profilverbindung nach einem oder mehreren der vorstehenden Ansprüche,
**dadurch gekennzeichnet, dass**
- die Buchse (34) einen radialen Schlitz (60) aufweist.

9. Profilverbindung nach einem oder mehreren der vorstehenden Ansprüche,
**dadurch gekennzeichnet, dass**
- die in der Wandung der Zentralausnehmung (80) des zweiten Profils (28) anliegende Außenkontur der Buchse (34) zweilippig ausgebildet ist.

10. Profilverbindung nach einem oder mehreren der vorstehenden Ansprüche 1 bis 8,
**dadurch gekennzeichnet, dass**
- die in der Wandung der Zentralausnehmung des zweiten Profils anliegende Außenkontur der Buchse teilkreisförmig mit konvexer Krümmung ausgebildet ist.

11. Profilverbindung nach einem oder mehreren der vorstehenden Ansprüche,
**dadurch gekennzeichnet, dass**
- die Buchse eine Gleitbundbuchse aufweist.

12. Profilverbindung nach einem oder mehreren der vorstehenden Ansprüche,
**dadurch gekennzeichnet, dass**
- das der Schaft (48) der Verlängerungseinheit (30.1, 30.2) einen Anschlag (50) für die Buchse (34) aufweist.

13. Profilverbindung nach Anspruch 8,
**dadurch gekennzeichnet, dass**
- in der Wandung der Buchse (34) ein Sprengring (56) eingelegt ist.

14. Profilverbindung nach einem oder mehreren der vorstehenden Ansprüche,
**dadurch gekennzeichnet, dass**
- die Kopfkontur (14.2) des Verbinderbolzens (12.2) als Kreisquerschnittskopf ausgebildet ist, dessen zum Schaft (40) weisender umlaufender Stirnrand eine Ringschneide (54) aufweist.

15. Profilverbindung nach einem oder mehreren der vorstehenden Ansprüche,
**dadurch gekennzeichnet, dass**
- eine Verbinderhülse (16) mit Innengewinde (20) vorhanden ist, die in eine senkrecht zur Längsrichtung des zweiten Profils (28) vorhandene Bohrung (62) einbringbar ist, und die eine Bolzenausnehmung (22) aufweist, derart, dass die Verbindereinrichtung (10.1, 10.2) bei in die Bohrung (62) eingesetzter Verbinderhülse (16) durch die Bolzenausnehmung (22) schiebbar ist und in deren Innengewinde (20) ein Gewindestift (18) mit entsprechendem Außengewinde (24) eindrehbar ist, der zumindest bereichsweise formschlüssig mit seinem Stirnendbereich (64) in eine am Schaft (40) des Verbinderbolzens (12.1, 12.2) vorhandene Kontur (66) einschraubbar ist, wodurch eine Verklemmung der Endkontur (14.1, 14.2) des Verbinderbolzens (12.1, 12.2) in der Ausnehmung (42) des ersten Profils (26) erfolgt.

16. Profilverbindung nach einem oder mehreren der vorstehenden Ansprüche,
**dadurch gekennzeichnet, dass**
- die Endkontur (14.3) des Verbinderbolzens (12.3) zumindest einen ebenen abgeflachten Bereich (84) aufweist, der bei in die Nut (42) des ersten Profils (26) eingeführter Endkontur (14.3) an der Nutlängswandung anliegt und damit eine Verdrehsicherung bildet.

17. Profilverbindung nach Anspruch 16,
**dadurch gekennzeichnet, dass**
- die Endkontur zwei gegenüberliegende abgeflachte ebene Bereiche (84) aufweist und der Abstand der ebenen Bereiche der hinterschnittenen Nutbreite entspricht.

## Claims

1. Profile connection with a connector device (10.1, 10.2) with a first profil (26) with a groove (42) with a given groove depth (N) and a second profil (28) for connecting said first profile (26) to the end side of said second profile (28) with a central recess (80), having
- a connector bolt (12.1, 12.2) with a shank (40) and an end contour (14), it being possible for the shank (40) of the connector bolt (12.1, 12.2) to be arranged and fixed in the central recess (80) of the second profile (28), and the end contour (14), in the installed state of the connector device, engaging with clamping action behind a recess, in particular groove (42), in the first profile (26), it being the case that
- the connector bolt (12.1, 12.2) is adjoined, on the end side which is located opposite the end contour (14), by an extension element (30.1, 30.2) with an end stop (32),
- the extension element (30.1, 30.2) is mounted with sliding action in a bushing (34),
- provided between the bushing (34) and the connector bolt (12.1, 12.2) is an elastic element (36) which acts directly or indirectly on the bushing (34) and the connector bolt (12.1, 12.2),
- the bushing (34) is arranged in the region of the extension element (30.1, 30.2), whereby
- the diameter of the shank (40) of the connector bolt (12.1, 12.2) corresponds to the diameter of the central recess (80) of the second profile (28), and
- the bushing (34) can be fixed with clamping action in the central recess (80) of the second profile (28),
**characterized in that**
- the geometry of the arrangement and/or the length of the extension element (30.3), of the connector bolt (12.1) with end contour (14) and the elastic element (36) are coordinated with one another such that, once the bushing (34) has been pushed with clamping action into the central recess (80) of the second profile (28), the end contour (14) because of the elastic element (36) projects beyond the end side (82) of the second profile (28) by an extent (Ü) which corresponds to the insertion-groove depth (N) of the first profile (26).

2. Profile connection as claimed in claim 1,
**characterized in that**
- the elastic element (36) is designed as a spring element, in particular as a helical spring which encloses the extension element (30.1, 30.2) in certain regions.

3. Profile connection as claimed in claim 1 or 2,
**characterized in that**
- the extension element is connected integrally to the connector bolt, or the extension element (30.1, 30.2), the connector bolt (12.1, 12.2), the bushing (34) and the elastic element (36) form a single manageable unit.

4. Profile connection as claimed in claim 1 or 2,
**characterized in that**
- the extension element (30.2) is designed as a drive-in element, in particular a notched nail, drive-in pin or knurled pin.

5. Profile connection as claimed in claim 1 or 2,
**characterized in that**
- the extension element (30.1) is connected in a releasable manner onto the connector bolt (12.1).

6. Profile connection as claimed in claim 5,
**characterized in that**
- for the releasable connection to the connector bolt (12.1), the extension element (30.1) has a latching element (44) and the connector bolt (12.1) has a corresponding mating latching element (46).

7. Profile connection as claimed in one or more of the preceding claims, **characterized in that**
- the extension element is designed as a plastic injection molding.

8. Profile connection as claimed in one or more of the preceding claims, **characterized in that**
- the busing (34) has a radial slit (60).

9. Profile connection as claimed in one or more of the preceding claims, **characterized in that**
- the outer contour of the bushing (34) which butts against the wall of the central recess (80) of the second profile (28) is of double-lipped design.

10. Profile connection as claimed in one or more of the preceding claims 1 to 8, **characterized in that**
- the outer contour of the bushing which butts against the wall of the central recess of the second profile is of semicircular design with convex curvature.

11. Profile connection as claimed in one or more of the preceding claims, **characterized in that**
- the bushing has a sliding flanged bushing.

12. Profile connection as claimed in one or more of the preceding claims, **characterized in that**
- the the shank (48) of the extension unit (30.1, 30.2) has a stop (50) for the bushing (34).

13. Profile connection as claimed in claim 8,
**characterized in that**
- a spring ring (56) is positioned in the wall of the bushing (34).

14. Profile connection as claimed in one or more of the preceding claims, **characterized in that**
- the head contour (14.2) of the connector bolt (12.2) is designed as a head which has a circular cross section and of which the encircling end border which is oriented toward the shank (40) has an annular cutting edge (54).

15. Profile connection as claimed in one or more of the preceding claims, **characterized in that**
- there is provided a connector sleeve (16) with an internal thread (20) which sleeve (16) can be introduced into a bore (62) which is provided perpendicular to the length direction of the second profile (28) and which sleeve (16) has a bolt recess (22) the connector device (10.1, 10.2) can be pushed through the bolt recess (22) when the connector sleeve (16) has been inserted into the bore (62), and a threaded pin (18) of corresponding external thread (24) can be screwed into the internal thread (20) of said connector sleeve, it being possible for the threaded pin, at least in certain regions, to be screwed in a form-fitting manner, by way of its end region (64), into a contour (66) provided on the shank (40) of the connector bolt (12.1, 12.2), as a result of which the end contour (14.1, 14.2) of the connector bolt (12.1, 12.2) is clamped in the recess (42) of the first profile (26).

16. Profile connection as claimed in one or more of the preceding claims, **characterized in that**
- the end contour (14.3) of the connector bolt (12.3) has at least one planar flattened region (84) which, with the end contour (14.3) introduced in to the groove (42) of the first profile (26), butts against the longitudinal groove wall and thus forms a rotation-prevention means.

17. Profile connection as claimed in claim 16, **characterized in that**
- the end contour has two mutually opposite flattened planar regions (84) and the spacing between the planar corresponds to the undercut groove width.

## Revendications

1. Raccord profilé avec un dispositif de raccordement (10.1, 10.2) avec un premier profilé (26) avec une rainure (42) avec une profondeur (N) de rainure prédéterminée et un deuxième profilé (28) pour raccorder le premier profilé (26) au côté frontal du deuxième profilé (28) qui présente un évidement central (80),
- avec un boulon de raccordement (12.1, 12.2) présentant une tige (40) et un contour terminal (14), la tige (40) du boulon de raccordement (12.1, 12.2) pouvant être disposée et immobilisée dans l'évidement central (80) du deuxième profilé (28), et le contour terminal (14), dans l'état monté du dispositif de raccordement, engageant par l'arrière avec serrage un évidement, notamment une rainure (42), dans le premier profilé (26),
- un élément de prolongement (30.1, 30.2) pourvu d'une butée finale (32) se raccordant au boulon de raccordement (12.1, 12.2) sur le côté frontal opposé au contour terminal (14),
- l'élément de prolongement (30.1, 30.2) étant monté à coulissement dans une douille (34),
- un élément élastique (36) étant présent entre la douille (34) et le boulon de raccordement (12.1, 12.2), élément qui agit directement ou indirectement sur la douille (34) et sur le boulon de raccordement (12.1, 12.2),
- la douille (34) étant disposée dans la région de l'élément de prolongement (30.1, 30.2),
- le diamètre de la tige (40) du boulon de raccordement (12.1, 12.2) correspondant au diamètre de l'évidement central (80) du deuxième profilé (28), et
- la douille (34) peut être immobilisée avec serrage dans l'évidement central (80) du deuxième profilé (28), **caractérisé en ce que**
- la géométrie de l'agencement ou encore les longueurs de l'élément de prolongement (30.3), du boulon de raccordement (12.1) avec son contour terminal (14) et de l'élément élastique (36) sont harmonisées de telle sorte qu'à la suite de l'enfoncement avec serrage de la douille (34) dans l'évidement central (80) du deuxième profilé (28), du fait de l'élément élastique (36) le contour terminal (14) dépasse du côté frontal (82) du deuxième profilé (28) d'une cote (Ü) qui correspond à la profondeur (N) de la rainure d'insertion du premier profilé (26).

2. Raccord profilé selon la revendication 1, **caractérisé en ce que** l'élément élastique (36) est réalisé sous forme d'élément de ressort, notamment sous forme de ressort spiral entourant sectoriellement l'élément de prolongement (30.1, 30.2).

3. Raccord profilé selon la revendication 1 ou 2, **caractérisé en ce que** l'élément de prolongement est relié d'un seul tenant au boulon de raccordement, ou encore l'élément de prolongement (30.1, 30.2), le boulon de raccordement (12.1, 12.2), la douille (34) et l'élément élastique (36) forment une unité maniable d'un seul tenant.

4. Raccord profilé selon la revendication 1 ou 2. **caractérisé en ce que** l'élément de prolongement (30.2) est conçu comme élément à enfoncer, notamment sous forme de clou cannelé, de goupille à enfoncer ou de goupille moletée.

5. Raccord profilé selon la revendication 1 ou 2, **caractérisé en ce que** l'élément de prolongement (30.1) est raccordé de manière amovible au boulon de raccordement (12.1).

6. Raccord profilé selon la revendication 5, **caractérisé en ce que** l'élément de prolongement (30.1) présente un élément d'enclenchement (44) pour le raccordement amovible au boulon de raccordement (12.1), et le boulon de raccordement (12.1) présente un élément complémentaire d'enclenchement (46) correspondant.

7. Raccord profilé selon une ou plusieurs des revendications précédentes, **caractérisé en ce que** l'élément de prolongement est réalisé sous la forme d'une pièce moulée par injection de matière plastique.

8. Raccord profilé selon une ou plusieurs des revendications précédentes, **caractérisé en ce que** la douille (34) présente une fente radiale (60).

9. Raccord profilé selon une ou plusieurs des revendications précédentes, **caractérisé en ce que** le contour extérieur de la douille (34) qui s'applique contre la paroi de l'évidement central (80) du deuxième profilé (28) est réalisé à deux lèvres.

10. Raccord profilé selon une ou plusieurs des revendications précédentes, **caractérisé en ce que** le contour extérieur de la douille qui s'applique contre la paroi de l'évidement central du deuxième profilé est réalisé en forme de cercle partiel à courbure convexe.

11. Raccord profilé selon une ou plusieurs des revendications précédentes, **caractérisé en ce que** la douille présente une douille à collet de glissement.

12. Raccord profilé selon une ou plusieurs des revendications précédentes, **caractérisé en ce que** la tige (48) de l'élément de prolongement (30.1, 30.2) présente une butée (50) pour la douille (34).

13. Raccord profilé selon la revendication 8, **caractérisé en ce qu'**un jonc d'arrêt (56) est logé dans la paroi de la douille (34).

14. Raccord profilé selon une ou plusieurs des revendications précédentes, **caractérisé en ce que** le contour de tête (14.2) du boulon de raccordement (12.2) est réalisé sous forme de tête de section circulaire, dont le bord frontal entourant tourné vers la tige (40) présente une arête tranchante annulaire (54).

15. Raccord profilé selon une ou plusieurs des revendications précédentes, **caractérisé en ce qu'**un manchon de raccordement (16) à filetage intérieur (20) est présent, qui peut être introduit dans un perçage (62) présent perpendiculairement à la direction longitudinale du deuxième profilé (28) et qui présente un évidement (22) pour boulon, de telle sorte que le dispositif de raccordement (10.1, 10.2), le manchon de raccordement (16) étant inséré dans le perçage (62), peut être enfilé à travers l'évidement (22) pour boulon, et une vis sans tête (18) dotée d'un filetage extérieur (24) correspondant peut être vissée dans le filetage intérieur (20) du manchon (16), vis qui, par sa région terminale frontale (64), peut être au moins sectoriellement serrée à vis en engagement positif dans un contour (66) présent sur la tige (40) du boulon de raccordement (12.1, 12.2), de sorte qu'on obtient un serrage du contour terminal (14.1, 14.2) du boulon de raccordement (12.1, 12.2) dans l'évidement (42) du premier profilé (26).

16. Dispositif de raccordement selon une ou plusieurs des revendications précédentes, **caractérisé en ce que** le contour terminal (14.3) du boulon de raccordement (12.3) présente au moins une région aplatie plane (84) qui, lorsque le contour terminal (14.3) est introduit dans la rainure (42) du premier profilé (26), s'applique contre la paroi longitudinale de la rainure et forme ainsi un blocage en rotation.

17. Dispositif de raccordement selon la revendication 16, **caractérisé en ce que** le contour terminal présente au moins deux régions planes aplaties (84) opposées, et la distance entre les régions planes correspond à la largeur de la rainure contre-dépouillée.
